# EUROPEAN PATENT SPECIFICATION

(11) **EP 4 338 140 B1**
(45) Date of publication and mention of the grant of the patent: **04.09.2024**
(21) Application number: 22724266.6
(22) Date of filing: 10.05.2022
(51) Int. Cl.: G07F 13/02, G07F 13/06, A47J 31/42, A47J 42/40, A47J 42/50, B65B 37/04

(54) **DEVICE FOR SUPPLYING A GROUND BREWING SUBSTANCE FOR PREPARING BEVERAGES**
VORRICHTUNG ZUR BEREITSTELLUNG EINER GEMAHLENEN BRÜHSUBSTANZ ZUR ZUBEREITUNG VON GETRÄNKEN
DISPOSITIF D'ALIMENTATION EN UNE SUBSTANCE POUR INFUSION MOULUE POUR LA PRÉPARATION DE BOISSONS

(30) Priority: 14.05.2021 EP 21173969; 09.06.2021 IT 202100015044
(43) Date of publication of application: 20.03.2024
(73) Proprietor: Rheavendors Industries S.p.A., 22100 Como (IT)
(72) Inventor: BRUZZESE, Fabio, 22100 Como (IT); ZAROLI, Luca Teresio, 22100 Como (IT)
(74) Representative: Studio Torta S.p.A.
(86) International application number: PCT/IB2022/054331
(87) International publication number: WO 2022/238893

(56) References cited:
- EP-A1- 2 769 920
- WO-A1-2018/044845
- CN-A- 109 956 094
- CN-A- 111 439 425
- JP-A- H05 290 266
- US-A- 2 182 131
- US-A- 4 378 078
- US-A- 4 398 675
- US-A- 4 999 021
- US-A1- 2003 217 690
- US-A1- 2020 148 604
- US-B1- 6 227 102
- US-B2- 6 745 668

## Description

### Cross-Reference to Related Applications

This patent application claims priority from European Patent Application no. 21173969.3 filed on May 14, 2021 and from Italian Patent Application no. 102021000015044 filed on June 9, 2021

### Technical Field of the Invention

The present invention relates to a device for supplying a ground brewing substance, preferably ground coffee, from a grinding unit to a brewing unit.

In particular, the present invention finds advantageous but not limiting application in the field of automatic beverage vending machines. Accordingly, the supply device is preferably of a type adapted to be arranged, i.e. mounted, within an automatic beverage vending machine for feeding an amount, preferably dosed, of ground coffee from a coffee grain or bean grinding unit to a brewing unit for preparing beverages.

### State of the Art

Automatic vending machines are known for preparing and supplying beverages, in particular for preparing and supplying beverages starting from a brewing substance such as, coffee, tea, cocoa, or the like.

Generally, such automatic vending machines essentially comprise:
- a grinding unit configured to receive and store the brewing substance, e.g. coffee grains or beans, and subsequently grind it into a ground product;
- a brewing unit configured to brew the ground product with hot or cold pressurized water in order to produce the beverage, and to supply said beverage to an external container, such as a glass or cup; and
- a brewing substance supply device configured to receive the ground product from the grinding unit and feed it to the brewing unit.

Typically, the supply device receives, in use, a dosed amount of ground brewing substance (ground product) at a time from the grinding unit and feeds it to the brewing unit so as to obtain an optimal portion of beverage from a nominal, dosed amount of brewing substance.

The need to feed to the brewing unit the entire dosed amount of brewing substance fed from the grinding unit to the supply device is therefore known in the sector.

For this purpose, supply devices associated with at least one vibration generator (or vibrating device or vibrational actuator) are known to subject a feeding conduit of the supply device to vibrations through which the ground brewing substance passes.

US-B-6745668 describes a unit for preparing coffee-type beverages by supplying a dose of product, wherein the unit comprises several brewing chambers and a plurality of grinders, from which ground coffee is fed to a funnel through respective outlets. The funnel is subjected to vibration, through a special vibrating pin, to facilitate the descent of the coffee into the brewing chamber.

WO-A-201844845 describes a system for filtering ground coffee and feeding it to a brewing unit. The system is provided with a vibrating device associated with a funnel or chute interposed between the outlet of a grinding unit and the inlet of the brewing unit. The vibrating device has the function of sifting the coffee and facilitating its descent along the chute.

JPH05290266 describes a unit for preparing coffee-type beverages by supplying a dose of product, the supply device of which has a chute and a vibration generator to subject the chute to vibrations.

Finally, CN-A-108968694 and EP-B-2524636 describe a coffee production unit comprising a grinding unit, a brewing unit and a funnel that is interposed between these two to feed ground coffee to the brewing unit. The funnel is associated with a vibrating device that has the purpose of shaking the funnel to facilitate the descent of the ground coffee.

Although the supply devices of the type described above are functionally and structurally valid, the Applicant has observed that they are susceptible to further improvements, in particular with regard to the transmission of vibrations produced by the generator to the components of the automatic vending machine, with regard to the simplification of the maintenance of the supply device and, at the same time, of the architecture thereof, and with regard to the hygienic conditions of operation of the vending machine.

### Object and Summary of the Invention

Aim of the present invention is therefore to realize a device for supplying a brewing substance which is highly reliable and of limited cost, and which allows to meet the needs specified above and connected to the supply devices of known type.

According to the invention, this aim is achieved by a device for supplying a brewing substance for preparing beverages as claimed in the appended Claims.

### Brief Description of the Drawings

For a better understanding of the present invention, a preferred non-limiting embodiment is described below, purely by way of example and with the aid of the attached drawings, wherein:
- Figure 1 is a schematic side view, partially sectioned and with parts removed for clarity's sake, of an automatic beverage vending machine comprising a supply device realized according to the present invention;
- Figure 2 is an exploded perspective view, in enlarged scale and with parts removed for clarity's sake, of the supply device of Figure 1;
- Figure 3 is an exploded side view, partially sectioned, in enlarged scale and with parts removed for clarity's sake, of the supply device of Figure 1; and
- Figure 4 is a side view partially sectioned and with parts removed for clarity's sake of the supply device of Figure 1.

### Detailed Description of Preferred Embodiments of the Invention

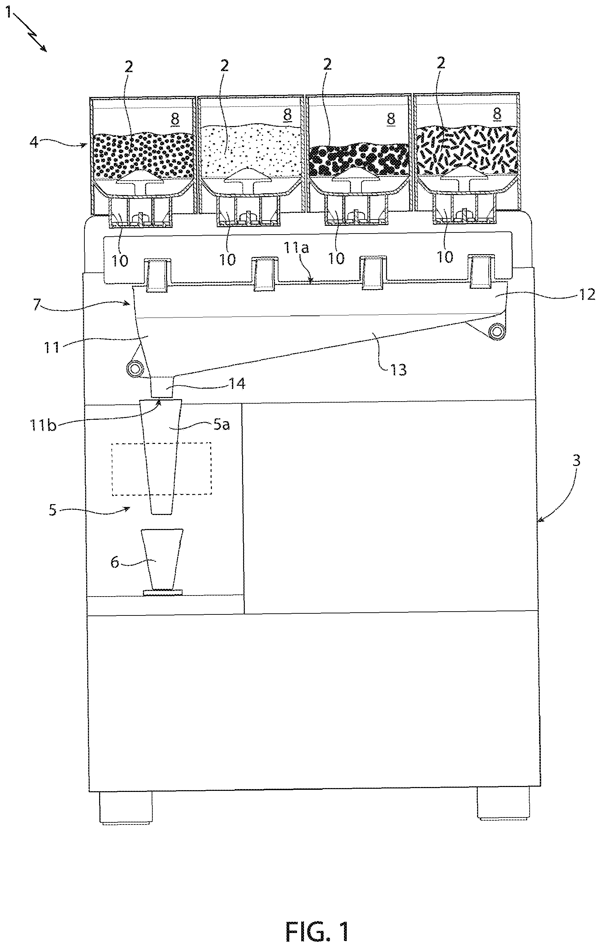

With reference to Figure 1, number 1 indicates as a whole an automatic vending machine for preparing and supplying beverages, e.g. espresso or other coffee-based beverages, tea, chocolate or other cocoa-based beverages, or the like, starting from a ground brewing substance 2, e.g. coffee, tea, cocoa or the like.

Preferably, before being ground, the brewing substance 2 is initially provided in grains or beans, in the case of coffee, broad beans, in the case of cocoa, or leaves, in the case of tea. Alternatively, the brewing substance 2 could be initially delivered in pellets or other types of artificially obtained grains.

The present description will explicitly refer, without thereby losing generality, to an automatic vending machine 1 configured to prepare beverages using ground coffee starting from coffee beans or grains as brewing substance 2.

The vending machine 1 comprises:
- a frame 3 defining a support, and advantageously an outer shell, for the components of the vending machine 1, some of which will be listed below;
- a grinding unit 4 fixed to the frame 3 and configured to receive, and preferably store, the brewing substance 2 to be ground (i.e. coffee beans or grains) and subsequently grind it to obtain a ground product (i.e. ground coffee);
- a brewing unit 5 fixed to the frame 3 and configured to brew the ground coffee received from the grinding unit 4, for example with pressurized hot or cold water, in order to produce the beverage, and to supply said beverage to an external container, for example a glass 6 or a cup; and
- a supply device 7 of the ground brewing substance 2, i.e., ground coffee, configured to be fixed to the frame 3 and configured to receive the ground coffee from the grinding unit 4 and feed it to the brewing unit 5.

According to this preferred and non-limiting embodiment, the grinding unit 4 comprises a plurality of grinding chambers 8 housing as many grinding members 10, for example rotating blades configured to grind the brewing substance 2 contained within the respective chamber 8.

In practice, each grinding chamber 8 defines, together with the relative grinding member 10, a grinder of the grinding unit 4.

Conveniently, the grinding unit 4 is configured to accommodate the same or different qualities or varieties of coffee or grains or beans of different grain sizes in the chambers 8.

In one embodiment, each chamber 8 is configured to accommodate a different type of brewing substance 2, advantageously but not limited to those listed above.

In one embodiment, the grinding unit 4 comprises a single chamber 8 configured to contain and grind, by means of the respective grinding member 10, a single type of brewing substance 2 at a time, for example coffee initially in grains or beans.

The chambers 8 have respective ground coffee outlets arranged downstream of the grinding members 10, all of which are connected to an inlet 5a of the brewing unit 5 through the brewing device 7.

As specified above, the grinding unit 4 and the brewing unit 5 are fixed to, and therefore supported by, the frame 3. The supply device 7 is also fixed to the frame 3, in a manner that will be described below.

In use, the supply device 7 receives an amount, preferably dosed, of brewing substance 2 which is ground at a time by the grinding unit 4 and feeds it to the brewing unit 5 so as to obtain, in a manner that is known and not described in detail, a portion of beverage from an optimal amount (the dosed amount) of brewing substance 2.

Therefore, in the light of the above, the supply device 7 is configured to be arranged inside the vending machine 1, in particular it is mounted to the frame 3 of the latter, to feed the ground coffee from the grinding unit 4 to the brewing unit 5.

As can be seen in the accompanying figures, the supply device 7 comprises a chute 11 configured to receive the aforesaid amount, preferably dosed, of ground coffee from the grinding unit 4 through an inlet opening 11a and convey it to the brewing unit 5 through an outlet opening 11b.

In detail, the chute 11 comprises an upper portion 12 having a constant cross-section, in the present case substantially rectangular with bevelled corners and defining a hopper configured to receive/collect the ground coffee through the opening 11a, and a lower portion 13 having a variable cross-section defining a sort of funnel, in the present case elongated truncated cone, which receives the ground coffee from the hopper and channels it to the brewing unit 5 through a discharge conduit 14, arranged downstream of the lower portion 13 and ending with the opening 11b.

In an alternative embodiment, the chute 11 could be defined by an inclined feeding conduit.

In another embodiment, the chute could not comprise the hopper or the funnel, and may simply be defined by an inclined plane, such as an inclined plate.

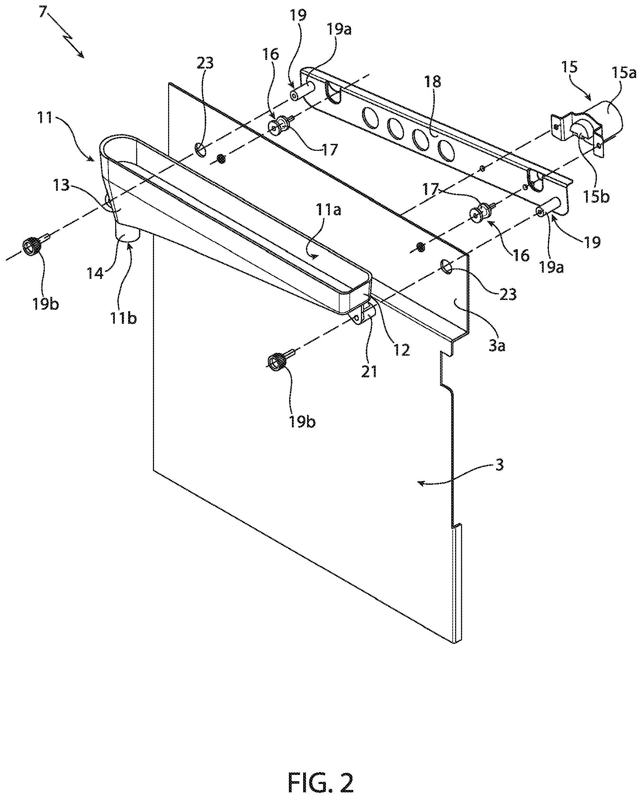

As can be seen in Figures 2 to 4, the supply device 7 further comprises a vibration generator 15 associated, in particular functionally coupled, to the chute 11 for applying vibrations to the latter.

These vibrations promote the complete descent of all the granules of the ground brewing substance 2, i.e. ground coffee, which passes on the chute 11.

In practice, while the amount of ground coffee is fed from the grinding unit 4 to the brewing unit 5 along the chute 11, the vibration generator 15 is actuated to apply (i.e. to transmit) the vibrations generated to the chute 11 itself and thus promote the descent of the ground coffee towards the brewing unit 5.

This results in an optimal preparation of the beverage portion, as each dosed amount of ground coffee is fed completely to the brewing unit 5. In addition, the next dose fed to chute 11 is prevented from still including part of the previous dose.

In the example described, the vibration generator 15 comprises an electric actuator (or motor) 15a on the output shaft of which an eccentric mass 15b is keyed, the rotation of which generates the vibrations. Alternatively, other types of vibration generators, such as electromagnetic or piezoelectric actuators, can also be used.

According to the invention, the supply device 7 comprises at least one connection member 16, in particular two connection members 16, for coupling (as will be seen below, with interposition of parts) the chute 11 to the frame 3 and comprising, each, at least one damper element 17 of the vibrations produced by the generator 15 operatively interposed between the frame 3 and the chute 11. Preferably, the damper elements 17 are made of elastomeric material, for example rubber.

In particular, as visible in Figures 2 to 4, the supply device 7 comprises a bracket 18 configured to be fixed, to the frame 3 by means of the connection members 16 with the interposition of the damper elements 17.

More precisely, the damper elements 17 are interposed between the bracket 18 and the frame 3.

It follows from the above that the connection members 16 are defined by components that are distinct from the chute 11.

According to an aspect of the present invention, the chute 11 is integrally fitted to the bracket 18 to be coupled, through the latter, to the frame 3 and to be supported by the latter indirectly through the bracket 18.

In more detail, the chute 11 is mounted to the bracket 18 by at least one further connection member 19, in particular by two further connection members 19.

In other words, the chute 11 is coupled to the frame 3 by means of the interposition of the bracket 18, and, as specified below, in a non-contact condition with the frame 3 itself.

According to a further aspect of the present invention, the vibration generator 15 is fixed to the bracket 18 to apply the vibrations to the latter and, suitably, the further connection members 19 are configured to transmit the vibrations from the bracket 18 to the chute 11.

In light of the above, the chute 11 is mounted on the bracket 18 by means of the further connection members 19, configured to transmit the vibrations from the bracket 18 to the chute 11, and the bracket 18 is in turn fixed to the frame 3 by means of the connection members 16 and with the interposition of the damper elements 17, so that these vibrations are not transmitted, at least in part and preferably in their entirety, to the frame 3.

In particular, each connection member 16 comprises a threaded member, for example a screw 20, for coupling the bracket 18 to the frame 3, and therefore, indirectly, the chute 11 to the frame 3, and an anti-vibration rubber pad mounted to the screw 20 and defining the aforesaid damper element 17.

More particularly, each anti-vibration rubber pad has a through hole configured to be engaged by the respective screw 20 in mounting conditions. That is, each rubber pad is "keyed" on the relative screw 20.

Therefore, the bracket 18 is fixed to the frame 3 by means of the screws 20 and the anti-vibration rubber pads, keyed on the screws 20, are interposed between the frame 3 and the bracket 18.

Thanks to this configuration, the transmission of the vibrations produced by the generator 15 to the frame 3 and therefore to the other components of the vending machine 1, such as for example the grinding unit 4 and the brewing unit 5, is at least limited, in particular substantially prevented, more in particular prevented. The Applicant has in fact had the opportunity to observe how these components are particularly sensitive during their operation to stress of various type: the vibrations could in fact cause an undesired movement of the container 6 within the brewing unit 5, or the undesired fall of beans or grains from the grinding unit 4 downwards. Therefore, the damping of the vibrations, which are advantageous for the chute 11 and for letting the brewing substance 2 passing through it completely fall but which are harmful to the other components, increases the overall service life of the vending machine 1 and improves the quality of the beverages produced by it.

Furthermore, thanks to the presence of the bracket 18, an indirect functional coupling of the chute 11 to the frame 3 is generated, which results in an accentuated vibrational decoupling between the two.

In addition, thanks to the fact that the generator 15 is fixed to the bracket 18, it is possible to dismount the chute 11 from the supply device 7 and, therefore, from the vending machine 1 without having to dismount the generator 15 as well.

Advantageously, the chute 11 is integrally fitted to the bracket 18 in conditions of mechanical non-interference with the frame 3.

More precisely, each further connection member 19 is arranged, in mounting conditions, in a position spaced from the frame 3, so as not to transmit vibrations to the latter.

In other words, while the bracket 18 is fixed to the frame 3 by means of the screw 20 and with the interposition of the damper elements 17, the chute 11 is fixed to the bracket 18 by means of the further connection members 19, without coming into contact with the frame 3.

Thus, the vibrational decoupling between chute 11 and frame 3 is further accentuated, while the mechanical decoupling between them is further facilitated.

According to the present invention as claimed, each further connection member 19 comprises:
- a threaded bushing 19a, preferably internally threaded, fixed to one of the chute 11 and the bracket 18, in the example described to the bracket 18, and configured to engage a respective seat 21 obtained in the other of the chute 11 and the bracket 18, in the example described obtained in the chute 11; and
- a screw 19b, in particular an engaging screw, configured to engage the bushing 19a when inserted into the respective seat 21 to fix the chute 11to the bracket 18 in a releasable manner.

More particularly, each seat 21 has an opening for receiving the relative bushing 19a and has a through hole 22 obtained in a bottom wall of the seat 21 itself opposite the opening for receiving the bushing 19a. Accordingly, the respective screw 19b is configured to engage the bushing 19a inserted in said seat 21 through the through hole 22.

Preferably, each bushing 19a has a cylindrical shape and, suitably, each seat 21 has a cylindrical shape to accommodate the respective bushing 19a.

Thanks to this configuration, in order to dismount the chute 11 from the supply device 7, it is sufficient to disengage (unscrew) the screws 19b from the bushings 19a and extract them from the through holes 22. In this condition, the bushings 19a can be removed from the seats 21 by moving the chute 11 away from the bracket 18, while the latter remains fixed and supported by the frame 3.

In this way, it is therefore possible to quickly dismount the chute 11 from the bracket 18 and, therefore, from the supply device 7, for example in order to cany out a cleaning operation or a replacement thereof quickly and efficiently and without having to dismount the bracket 18 and/or the generator 15.

As an alternative to the further connection members 19, other types of connectors may be used provided that they are suitable for connecting the bracket 18 and the chute 11 without interfering with the plate 3a so that the vibrations are not transmitted to the latter.

Conveniently, the frame 3 comprises a partition septum or partition plate 3a, suitably mounted inside the vending machine 1, which separates a "clean" area of the vending machine 1, at which the brewing substance 2 and any food substance that may be used in the preparation of the beverage (for example, water, milk or artificial flavourings) pass, from a "dirty" area of the vending machine 1, at which no brewing substance 2 or any food substance passes.

Advantageously, the bracket 18 and the chute 11 are arranged on opposite sides of the plate 3a itself.

In other words, the chute 11 is arranged at the "clean" side of the plate 3a and the bracket 18, and therefore the generator 15, are arranged on the opposite side of the plate 3a, i.e. at the "dirty" side of the plate 3a.

This configuration leads to an improvement in the hygienic operating conditions of the vending machine 1.

Advantageously, each bushing 19a crosses the plate 3a with clearance and without interference. More particularly, the plate 3a comprises two through holes 23 configured to be engaged, in mounting conditions, by the bushings 19a with radial clearance, so that the chute 11 is directly coupled to the bracket 18 and indirectly, through this, to the frame 3.

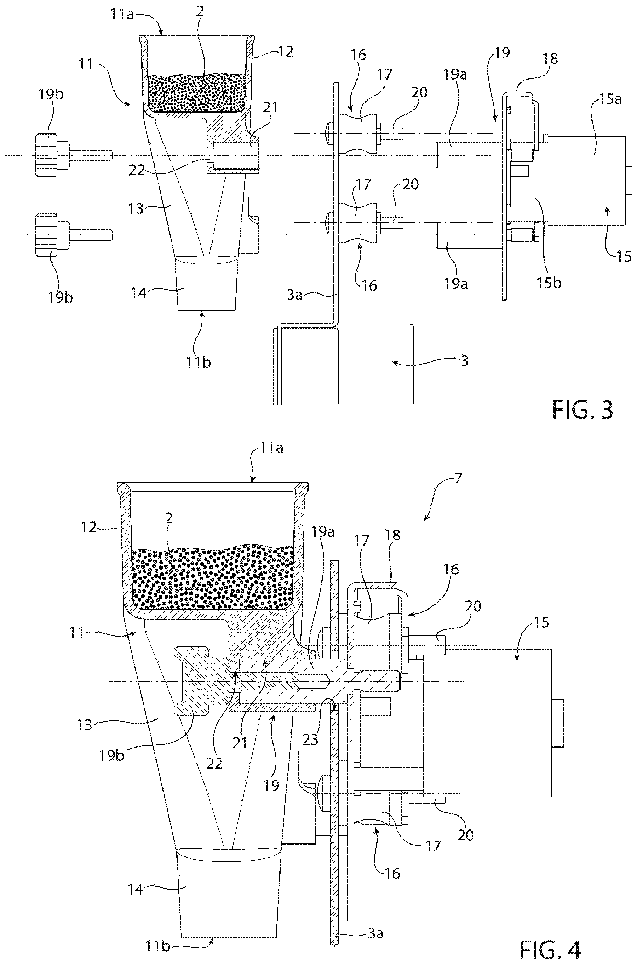

In particular, each bushing 19a has a diameter smaller than the diameter of the through holes 23, as shown in Figure 4.

More particularly, each bushing 19a is configured to engage the corresponding through hole 23 with a clearance such that the bushing 19a does not interfere with the plate 3a during operation of the vibration generator 15.

As specified above, this configuration results in a better vibrational decoupling of the chute 11 with respect to the frame 3, as it eliminates any possible point of contact, and therefore transmission of vibrations, between the chute 11 and the frame 3.

Preferably, the vending machine 1 comprises a control unit (not shown) configured to control:
- the activation of the grinding members 10 of the grinding unit 4;
- an activation of the vibration generator 15 to apply vibrations to the chute 11;
- the activation of the brewing unit 5 to brew the ground coffee fed into it and prepare the beverage.

From an examination of the characteristics of the device realized according to the present invention, the advantages that it allows to obtain are clear.

In particular, thanks to the presence of the damper elements 17, the transmission of the vibrations produced by the generator 15 to the frame 3 and therefore to the other components of the vending machine 1, such as for example the grinding unit 4 and the brewing unit 5, is at least limited, in particular substantially prevented, more in particular prevented. This results, as specified above, in an increase in the service life of these components and in an improvement in the quality of the beverage produced.

Furthermore, thanks to the presence of the bracket 18, an indirect functional coupling of the chute 11 to the frame 3 is generated, which results in an accentuated vibrational decoupling between the two.

In addition, thanks to the fact that the generator 15 is fixed to the bracket 18, it is possible to dismount the chute 11 from the supply device 7 and, therefore, from the vending machine 1 without having to dismount the generator 15 as well.

Further, thanks to the fact that the chute 11 is arranged on the opposite side of the plate 3a with respect to the bracket 18 and the generator, the hygienic conditions of the vending machine 1 have improved.

Finally, the particular configuration of the further connection elements 19 between the chute 11 and the bracket 18, allows a rapid disassembly of the chute 11 from the bracket 18 itself, it being sufficient to unscrew the screws 19b from the bushings 19a engaging the seats 21.

In particular, the chute 11 could be directly coupled to the frame through the connection members 16 and with the interposition of the damper elements 17. In this case, the supply device 7 does not comprise any bracket 18 and the generator 15 is fixed directly to the chute 11.

Furthermore, the chute 11 and the bracket 18 could both be arranged on the same side of the plate 3a. In this case, the generator 15 could be fixed to the bracket and arranged on the opposite side of the plate 3a, or it could be directly fixed to the chute 11 and arranged on the same side as the plate 3a.

## Claims

1. A device (7) for supplying a ground brewing substance (2) for preparing beverages, the device (7) being configured to be arranged within an automatic beverage vending machine (1) to feed the ground brewing substance (2) from a grinding unit (4) of the vending machine towards a brewing unit (5) of the vending machine, and comprising:
- a chute (11) configured to receive an amount of ground brewing substance (2) from the grinding unit (4) and to convey it to the brewing unit (5);
- a vibration generator (15) associated with the chute (11) to apply vibrations thereto;
**characterized in that** the device (7) comprises:
- at least one connection member (16) for coupling the chute (11) to a fixed frame (3) of the automatic vending machine (1) and comprising at least one damper element (17) for damping vibrations transmitted to the frame (3); and
- a bracket (18) configured to be fixed to the frame (3) by means of the connection member (16) with the interposition of the damper element (17);
wherein the chute (11) is integrally fitted to the bracket (18) to be coupled, through the bracket (18), to the frame (3) and to be supported by the frame (3);
wherein the vibration generator (15) is fixed to the bracket (18) for applying vibrations to the bracket (18);
wherein the at least one damper element (17) is configured to be operatively interposed, when the supply device (7) is mounted to the frame (3), between the frame (3) and the bracket (18);
wherein the chute (11) is integrally fitted to the bracket (18) by means of at least one further connection member (19) configured to transmit said vibrations from the bracket (18) to the chute (11);
wherein said further connection member (19) comprises:
- a threaded bushing (19a) fixed to one of the chute (11) and the bracket (18) and configured to engage a respective seat (21) obtained in the other of the chute (11) and the bracket (18); and
- a threaded member (19b) configured to engage the bushing (19a) inserted into the seat (21) for fixing the chute (11) to the bracket (18) in a releasable manner;
wherein the bushing (19a) is configured to cross a through hole (23) formed in a partition plate (3a) of said frame (3) with a clearance such that the bushing (19a) does not interfere with the partition plate (3a) during operation of the vibration generator (15); and wherein the bracket (18) and the chute (11) are configured to be arranged on opposite sides of said partition plate (3a).

2. Supply device as claimed in Claim 1, wherein the further connection member (19) is configured to be arranged, when the supply device (7) is mounted to the frame (3), in a position spaced from the frame (3).

3. Device as claimed in Claim 1 or 2, wherein the bushing (19a) is fixed to the bracket (18), and wherein the seat (21) is obtained in the chute (11).

4. Supply device as claimed in any one of the preceding Claims, wherein said at least one damper element (17) is made of elastomeric material.

5. Supply device as claimed in Claim 4, wherein said connection member (16) comprises a threaded member (20) for coupling the chute (11) to the frame (3) and at least one anti-vibration rubber pad mounted on the threaded member (20) and defining said damper element (17).

6. Automatic vending machine (1) for preparing beverages starting from a brewing substance (2), the vending machine (1) comprising:
- a grinding unit (4) configured to receive the brewing substance (2) to be ground and configured to grind the brewing substance (2) so as to obtain a ground product;
- a brewing unit (5) configured to receive the ground product and to brew it for the preparation of a beverage;
- a fixed frame (3) to which the grinding unit (4) and the brewing unit (5) are mounted; and
- a supply device (7) as claimed in any one of the preceding Claims;
wherein the chute (11) is coupled to the frame (3) by means of said connection member (16) and with the interposition of the damper element (17).

## Patentansprüche

1. Vorrichtung (7) zum Zuführen einer gemahlenen Brühsubstanz (2) zur Zubereitung von Getränken, wobei die Vorrichtung (7) konfiguriert ist, in einer automatischen Getränkeverkaufsmaschine bzw. einem Getränkeverkaufsautomaten (1) angeordnet zu sein, um die gemahlene Brühsubstanz (2) von einer Mahleinheit (4) des Verkaufsautomaten zu einer Brüheinheit (5) des Verkaufsautomaten zu leiten, und umfassend:
- eine Rutsche (11), die konfiguriert ist, eine Menge gemahlener Brühsubstanz (2) von der Mahleinheit (4) aufzunehmen und zu der Brüheinheit (5) zu befördern;
- einen Vibrationsgenerator (15), der mit der Rutsche (11) verbunden ist, um Vibrationen auf diese auszuüben bzw. sie in Vibrationen zu versetzen;
**dadurch gekennzeichnet, dass** die Vorrichtung (7) umfasst:
- zumindest ein Verbindungsglied (16) zum Koppeln der Rutsche (11) mit einem festen Rahmen (3) des Getränkeverkaufsautomaten (1) und umfassend zumindest ein Dämpferelement (17) zum Dämpfen von auf den Rahmen (3) übertragenen Vibrationen; und
- eine Halterung (18), die konfiguriert ist, mittels des Verbindungsglieds (16) unter Zwischenanordnung des Dämpferelements (17) an dem Rahmen (3) befestigt zu sein;
wobei die Rutsche (11) integral bzw. einstückig an der Halterung (18) angebracht ist, um durch die Halterung (18) mit dem Rahmen (3) gekoppelt und durch den Rahmen (3) gestützt bzw. getragen zu sein,
wobei der Vibrationsgenerator (15) an der Halterung (18) befestigt ist, um Vibrationen auf die Halterung (18) auszuüben;
wobei das zumindest eine Dämpferelement (17) konfiguriert ist, operativ zwischen dem Rahmen (3) und der Halterung (18) angeordnet zu sein, wenn die Zuführvorrichtung (7) an dem Rahmen (3) montiert ist,
wobei die Rutsche (11) mittels zumindest eines weiteren Verbindungsglieds (19), das konfiguriert ist, die Schwingungen von der Halterung (18) auf die Rutsche (11) zu übertragen, integral bzw. einstückig an der Halterung (18) angebracht ist,
wobei das weitere Verbindungsglied (19) umfasst:
- eine Gewindebuchse (19a), die an einer von Rutsche (11) und Halterung (18) befestigt ist und konfiguriert ist, in einen jeweiligen Sitz (21) einzugreifen, der in der anderen von Rutsche (11) und Halterung (18) vorhanden ist; und
- ein Gewindeglied (19b), konfiguriert ist, in die Buchse (19a) einzugreifen, die in den Sitz (21) eingesetzt ist, um die Rutsche (11) lösbar an der Halterung (18) zu befestigen;
wobei die Buchse (19a) konfiguriert ist, ein Durchgangsloch (23) zu durchqueren, das in einer Trennplatte (3a) des Rahmens (3) mit einem Abstand derart ausgebildet ist, dass die Buchse (19a) während des Betriebs des Vibrationsgenerators (15) nicht mit der Trennplatte (3a) zusammentrifft; und wobei die Halterung (18) und die Rutsche (11) konfiguriert sind, auf gegenüberliegenden bzw. entgegengesetzten Seiten der Trennplatte (3a) angeordnet zu sein.

2. Zuführvorrichtung nach Anspruch 1, wobei das weitere Verbindungsglied (19) konfiguriert ist, in einer von dem Rahmen (3) beabstandeten Position angeordnet zu sein, wenn die Zuführvorrichtung (7) an dem Rahmen (3) montiert ist.

3. Vorrichtung nach Anspruch 1 oder 2, wobei die Buchse (19a) an der Halterung (18) befestigt ist und wobei der Sitz (21) in der Rutsche (11) vorhanden ist.

4. Zuführvorrichtung nach einem der vorhergehenden Ansprüche, wobei das zumindest eine Dämpferelement (17) aus Elastomermaterial besteht.

5. Zuführvorrichtung nach Anspruch 4, wobei das Verbindungsglied (16) ein Gewindeglied (20) zum Koppeln der Rutsche (11) mit dem Rahmen (3) und zumindest ein Antivibrationsgummipolster umfasst, das an bzw. auf dem Gewindeglied (20) montiert ist und das Dämpferelement (17) definiert.

6. Verkaufsautomat bzw. automatische Verkaufsmaschine (1) zum Zubereiten von Getränken ausgehend von einer Brühsubstanz (2), wobei der Verkaufsautomat (1) umfasst:
- eine Mahleinheit (4), die konfiguriert ist, die zu mahlende Brühsubstanz (2) aufzunehmen, und konfiguriert ist, die Brühsubstanz (2) zu mahlen, um ein gemahlenes Produkt zu erhalten;
- eine Brüheinheit (5), die konfiguriert ist, das gemahlene Produkt aufzunehmen und es zur Zubereitung eines Getränks aufzubrühen;
- einen festen Rahmen (3), an dem die Mahleinheit (4) und die Brüheinheit (5) montiert sind; und
- eine Zufuhrvorrichtung (7) nach einem der vorhergehenden Ansprüche;
wobei die Rutsche (11) mittels des Verbindungsglieds (16) und unter Zwischenanordnung des Dämpferelements (17) mit dem Rahmen (3) gekoppelt ist.

## Revendications

1. Dispositif (7) d'alimentation en une substance pour infusion moulue (2) pour la préparation de boissons, le dispositif (7) étant configuré pour être agencé à l'intérieur d'un distributeur automatique de boissons (1) pour fournir la substance pour infusion moulue (2) depuis une unité de broyage (4) du distributeur automatique vers une unité d'infusion (5) du distributeur automatique, et comprenant :
- une goulotte (11) configurée pour recevoir une quantité de substance pour infusion moulue (2) de l'unité de broyage (4) et pour la transporter vers l'unité d'infusion (5) ;
- un générateur de vibrations (15) associé à la goulotte (11) pour lui appliquer des vibrations ;
**caractérisé en ce que** le dispositif (7) comprend :
- au moins un organe de raccordement (16) pour coupler la goulotte (11) à un cadre fixe (3) du distributeur automatique (1) et comprenant au moins un élément amortisseur (17) pour amortir les vibrations transmises au cadre (3) ; et
- un support (18) configuré pour être fixé au cadre (3) au moyen de l'organe de raccordement (16) avec l'interposition de l'élément amortisseur (17);
dans lequel la goulotte (11) est adaptée intégralement au support (18) pour être couplée, par le biais du support (18), au cadre (3) et pour être supportée par le cadre (3) ;
dans lequel le générateur de vibrations (15) est fixé au support (18) pour appliquer des vibrations au support (18) ;
dans lequel l'au moins un élément amortisseur (17) est configuré pour être interposé fonctionnellement, lorsque le dispositif d'alimentation (7) est monté sur le cadre (3), entre le cadre (3) et le support (18) ;
dans lequel la goulotte (11) est adaptée intégralement au support (18) au moyen d'au moins un autre organe de raccordement (19) configuré pour transmettre lesdites vibrations du support (18) à la goulotte (11) ;
dans lequel ledit autre organe de raccordement (19) comprend :
- une bague filetée (19a) fixée à l'un de la goulotte (11) et du support (18) et configurée pour se mettre en prise avec un siège (21) respectif obtenu dans l'autre de la goulotte (11) et du support (18) ; et
- un organe fileté (19b) configuré pour se mettre en prise avec la bague (19a) insérée dans le siège (21) pour fixer la goulotte (11) au support (18) d'une manière libérable ;
dans lequel la bague (19a) est configurée pour croiser un trou traversant (23) formé dans une plaque de séparation (3a) dudit cadre (3) avec un espace tel que la bague (19a) n'interfère pas avec la plaque de séparation (3a) pendant le fonctionnement du générateur de vibrations (15) ; et dans lequel le support (18) et la goulotte (11) sont configurés pour être agencés sur des côtés opposés de ladite plaque de séparation (3a).

2. Dispositif d'alimentation selon la revendication 1, dans lequel l'autre organe de raccordement (19) est configuré pour être agencé, lorsque le dispositif d'alimentation (7) est monté sur le cadre (3), dans une position espacée du cadre (3).

3. Dispositif selon la revendication 1 ou 2, dans lequel la bague (19a) est fixée au support (18), et dans lequel le siège (21) est obtenu dans la goulotte (11).

4. Dispositif d'alimentation selon l'une quelconque des revendications précédentes, dans lequel ledit au moins un élément amortisseur (17) est constitué de matériau élastomère.

5. Dispositif d'alimentation selon la revendication 4, dans lequel ledit organe de raccordement (16) comprend un organe fileté (20) pour le raccordement de la goulotte (11) au cadre (3) et au moins un patin en caoutchouc anti-vibration monté sur l'organe fileté (20) et définissant ledit élément amortisseur (17).

6. Distributeur automatique (1) de préparation de boissons à partir d'une substance pour infusion (2), le distributeur automatique (1) comprenant :
- une unité de broyage (4) configurée pour recevoir la substance pour infusion (2) à broyer et configurée pour broyer la substance pour infusion (2) de manière à obtenir un produit moulu ;
- une unité d'infusion (5) configurée pour recevoir le produit moulu et pour l'infuser pour la préparation d'une boisson ;
- un cadre fixe (3) sur lequel sont montées l'unité de broyage (4) et l'unité d'infusion (5) ; et
- un dispositif d'alimentation (7) selon l'une quelconque des revendications précédentes ;
dans lequel la goulotte (11) est couplée au cadre (3) au moyen dudit organe de raccordement (16) et avec l'interposition de l'élément amortisseur (17).
